# EUROPÄISCHE PATENTANMELDUNG

(11) **EP 4 381 958 A2**
(43) Veröffentlichungstag der Anmeldung: **12.06.2024**
(21) Anmeldenummer: 23195494.2
(22) Anmeldetag: 05.09.2023
(51) Int. Cl.: A23K 50/48, A23K 10/30

(54) **VERFAHREN ZUR HERSTELLUNG EINES NASSTIERFUTTERPRODUKTES, NASSFUTTERPRODUKT UND VORRICHTUNG ZU DESSEN HERSTELLUNG**

(30) Priorität: 08.12.2022 DE 202022106874 U; 11.05.2023 DE 202023102557 U
(71) Anmelder: Fair Food P&S GmbH, 63925 Laudenbach (DE)
(72) Erfinder: WAGNER, Klaus, 63925 Laudenbach (DE)
(74) Vertreter: K & H Bonapat Patentanwälte Koch · von Behren & Partner mbB

(57) **Zusammenfassung**

Die vorliegende Erfindung betrifft ein Verfahren zur Herstellung eines Nassfutterprodukt für Tiere, insbesondere Haustiere, aufweisend die Schritte:
- Mischen fester Tiernahrungskomponenten (116) mit einer Soße (124) oder Soßenkomponenten in einem temperierbaren Prozessreaktor (102), und
- Sterilisieren der Mischung durch Wärmebehandlung in dem Prozessreaktor (102).

Sie betrifft zudem ein Nassfutterprodukt für Tiere, insbesondere Haustiere, das durch das Verfahren hergestellt ist. Schließlich betrifft die Erfindung eine Vorrichtung zur Herstellung eines Nassfutterprodukts für Tiere, insbesondere Haustiere, das aufweist:
- einen Prozessreaktor (102), der zur Aufnahme fester Tiernahrungskomponenten (116) und einer Soße (124) oder Soßenkomponenten ausgebildet ist,
- eine Temperiereinrichtung (103), die zum Temperieren des Prozessreaktors (102), insbesondere von Wänden des Prozessreaktors (102), ausgebildet ist,
- eine Mischeinrichtung (108), die zum Mischen der im Prozessreaktor (102) befindlichen Komponenten eingerichtet ist, und
- eine Steuereinrichtung (160), welche zum Steuern der Mischeinrichtung (108), um die Komponenten in dem Prozessreaktor (102) zu vermischen, und zum Steuern der Temperiereinrichtung (103), um die Komponenten oder die Mischung in dem Prozessreaktor (102) durch Wärmebehandlung zu sterilisieren, ausgebildet und konfiguriert ist.

## Beschreibung

Die vorliegende Erfindung betrifft ein Verfahren zur Herstellung eines Nasstierfutterproduktes für Tiere, das Nassfutterprodukt und eine Vorrichtung zu dessen Herstellung.

Normalerweise basieren Nassfutterprodukte für Haustiere auf tierischem Fleisch oder tierischen Nebenprodukten, restrukturiertem Fleisch oder Fleischanaloga (einer Kombination aus Fleisch/tierischen Nebenprodukten und pflanzlichem Protein). Die Nassfutterprodukte enthalten mehr als 45 % Feuchtigkeit, typischerweise etwa 65 bis etwa 82 % Feuchtigkeit, und eine Wasseraktivität von mehr als 0,9. Es gibt zwei Haupttypen von Nassfutter für Haustiere. Der erste Typ wird typischerweise hergestellt, indem eine Mischung aus essbaren Komponenten unter Hitze verarbeitet wird, um eine homogene, kohäsive halbfeste Masse zu erzeugen, die durch hitzekoaguliertes Protein strukturiert ist, das als "Pastete" oder "Laib" bekannt ist. Die zweite Art von Nassfutter für Haustiere wird typischerweise durch Kombinieren von Fleischstücken oder restrukturierten Fleischstücken mit einer Soße (d. h. Soße, Gelee oder Mousse), bekannt als "Stücke und Soße", zubereitet. Diese Nassfutterprodukte enthalten erhebliche Mengen an Fleisch und tierischen Nebenprodukten.

Die Verwendung von essbaren Pilzen und pflanzlichen Proteinen in Nassfutter für Haustiere kann Fleisch in Bezug auf Textur und Aminosäureprofil ersetzen.

Das Dokument EP 3292759 bezieht sich auf ein Verfahren zur Herstellung eines fleischfreien Produkts auf der Basis von essbaren Pilzen der Gattung Pleurotus, insbesondere der Art Pleurotus eryngii. Das fleischfreie Produkt wird in vier Schritten hergestellt. Im ersten Schritt werden Speisepilze in kleine Stücke zerkleinert, gefolgt von einem zweiten Schritt, der darin besteht, die zerkleinerten Speisepilze mit Pflanzenöl, einer Stärkequelle, tierischen und/oder pflanzlichen Proteinen und Salz zu einer homogenen Verbindung zu mischen. Die so entstandene homogene Masse wird in einem dritten Schritt in Gießformen erhitzt und anschließend in der offenen oder geschlossenen Form zu einem erstarrten fleischfreien Produkt abgekühlt.

Das Dokument CN111642648 offenbart einen proteinreichen Hunde- und Katzensnack, der aus künstlichem Pflanzenproteinfleisch, Leber, Sonnenblumenöl, Eigelb und anderen Zutaten hergestellt wird, während das künstliche Pflanzenproteinfleisch aus getrocknetem Pleurotus eryingii-Proteinpulver und Sojabohnenprotein besteht.

Das Dokument CN106260680 offenbart ein Tierfutter, das durch Mischen tierischer Produkte wie Schweinefleisch, Schmalzöl, Fischmehl, Hühnerleber und Gemüse, einschließlich Nadelpilzen, hergestellt wird.

Es ist deshalb die Aufgabe der Erfindung, die Probleme im Stand der Technik zu lösen, ohne Abstriche bei Qualität, Schmackhaftigkeit und Hygiene. Insbesondere ist es Aufgabe der Erfindung, ein Nassfutterprodukt für Tiere, insbesondere Haustiere, das aus in großen Mengen verfügbaren Rohstoffen hergestellt werden kann, welches qualitativ hochwertig, schmackhaft, hygienisch sicher ist und sich auch durch eine vergleichbare Textur und ein ähnliches Nährstoffprofil wie Nassfutter für Haustiere auf Fleischbasis auszeichnet, wobei dessen Herstellung wenig arbeits- und zeitintensiv, kostengünstig, eine gute Ernergiebilanz aufweisend und wenig umweltbelastend ist, und eine entsprechende Vorrichtung zur Herstellung eines Nassfutterprodukts bereitzustellen.

Die Aufgabe wird erfindungsgemäß wenigstens in Teilaspekten durch ein Verfahren zur Herstellung eines Nasstierfutterproduktes nach Anspruch 1, eine Nassfutterprodukt gemäß Anspruch 12 und eine Vorrichtung gemäß Anspruch 13 gelöst. Vorteilhafte Weiterbildungen der Erfindung sind in den abhängigen Ansprüchen sowie in der Beschreibung angegeben.

Die Erfindung geht von dem Gedanken aus, ein Nassfutterprodukt für Tiere, insbesondere Haustiere, durch ein neuartiges Verfahren herzustellen, welches die folgenden Schritte aufweist:
Mischen fester Tiernahrungskomponenten mit einer Soße oder Soßenkomponenten in einem temperierbaren Prozessreaktor, und
Sterilisieren der Mischung durch Wärmebehandlung in dem Prozessreaktor.

In einer vorteilhaften Ausführungsform sind folgende Schritte vorgesehen:
das Mischen fester Tiernahrungskomponenten, die Speisepilze und pflanzliches und/oder tierisches Protein umfassen, mit einer Soße oder Soßenkomponenten, und optional weiteren Komponenten, die Stärke, insbesondere in Form einer Stärkequelle, Öl, insbesondere Pflanzenöl, Mineralstoffe, Vitamine und Geschmacksverstärker umfassen, in einem temperierbaren Prozessreaktor derart, dass die Mischung 5 bis 20 Gew.-% Speisepilze und entweder ≤ 10 Gew.-% pflanzliche Proteine oder 20 bis 30 Gew.-% tierische Proteine aufweist, und
das Sterilisieren der Mischung durch Wärmebehandlung in dem Prozessreaktor derart, dass nach dem Sterilisieren die Mischung einen Trockenmasseanteil von ≤ 55 %, insbesondere ca. 35 bis 18 %, und eine Wasseraktivität von ≥ 0,9 aufweist.

Die Mischung enthält neben den 5 bis 20 Gew.-% an Speisepilzen vorteilhafterweise ≤ 10 Gew.-% pflanzliche Proteine, ≤ 1 Gew.-%, insbesondere ≤ 0,1 Gew.-%, tierische Proteine, ≤ 15 Gew.-% Stärkequelle, und ≤ 15 Gew.-%, bevorzugt ≤ 10 Gew.-%, Pflanzenöl, Mineralstoffe, Vitamine und Geschmacksverstärker für den Erhalt eines veganen Nassfutterproduktes, das frei von tierischen Nahrungsbestandteilen ist. Unter die Erfindung fällt also ein mit essbaren Pilzen und pflanzlichen Proteinen zubereitetes feuchtes Haustierfutterprodukt, das in Bezug auf Textur- und Ernährungsvorteile denen von tierischem Fleisch oder von Fleisch abgeleiteten Produkten so ähnlich wie möglich ist. Das pflanzliche Protein ist hierbei bevorzugt ausgewählt aus Erbsenproteinkonzentrat/-isolat, Sojaproteinkonzentrat/-isolat, Weizenproteinkonzentrat/-isolat, Sonnenblumenprotein, Rapsprotein, Kichererbsenprotein, Lupine Protein, Ackerbohnenproteinkonzentrat, Kürbiskernprotein, Entenkrautprotein, Mykoprotein, Erdnussprotein, Hanfprotein, Quinoa, Chia, Amaranth, Linsen, Kichererbsen, Buchweizen, Dinkel, Nudeln (Vollkornnudeln, Kichererbsennudeln), Reis und Kombinationen davon. Eine Auswahl des pflanzlichen Proteins aus Leguminosenproteinen ist vorteilhafterweise auch möglich. Die Verwendung von essbaren Pilzen und pflanzlichen Proteinen in Nassfutter für Haustiere kann Fleisch in Bezug auf Textur und Aminosäureprofil erfolgreich ersetzen, die Kosten erheblich senken, den CO₂-Fußabdruck verringern und gleichzeitig das Gesamternährungsprofil und die Qualität des Endprodukts beibehalten.

Der Speisepilz wird bevorzugt entweder aus den Basidiomyceten, die zur Familie der Pleurotaceae einschließlich Agaricales, Agaricomycetes gehören oder aus Pleurotus ostreatus und Pleurotus eryngii ausgewählt. Essbare Pilze aus der Familie der Basidiomyceten, die zur Familie der Pleurotaceae gehören, verleihen Textur, Aroma und Geschmack neben der möglichen Wirkung auf die Gesundheit für die bioaktiven Verbindungen. Pleurotus-Pilze sind reich an Proteinen und essenziellen Aminosäuren, wodurch sie ein Ersatz für die Fleischernährung sein können. Sie weisen Ballaststoffe, Kohlenhydrate, wasserlösliche Vitamine und Mineralstoffe und einen geringen Fettgehalt auf. Essbare Pilze der Gattung Pleurotus sind einfach zu züchten und in großen Mengen verfügbar und können frisch gemahlen in unterschiedlichen Graden oder Partikelgrößen oder als "pflanzliches Fleischanalog" verwendet werden. Dementsprechend betrifft die Erfindung ein Nassfutterprodukt für Tiere, insbesondere Haustiere, das aus in großen Mengen verfügbaren Rohstoffen hergestellt werden kann, wie essbare Pilze Pleurotus spp. und pflanzliche Proteine. Das Nassfutter für Haustiere hat den Vorteil, dass die Rohmaterialien direkt verwendet werden, wodurch die Schritte des Hinzufügens der essbaren Pilze in einem vorgeformten fleischfreien Analogon entfallen, es zeichnet sich auch durch eine vergleichbare Textur und ein ähnliches Nährstoffprofil wie Nassfutter für Haustiere auf Fleischbasis aus, kann kostengünstiger sein und eine verbesserte Energiebilanz aufweisen.

Der Begriff "Mischen", wie er hier verwendet wird, bezieht sich auf den Vorgang des Kombinierens oder Zusammenstellens verschiedener Lebensmittelkomponenten, um eine Substanz oder Masse zu bilden.

Die Mischung kann neben den 5 bis 20 Gew.-% Speisepilz auch 20 bis 30 Gew.-% tierisches Protein in Form von Fleisch und/oder tierischen Nebenerzeugnissen, und ≤ 15 Gew.-% Stärkequelle, Öl, Mineralstoffe, Vitamine und Geschmacksverstärker umfassen, um ein flexitarisches Nassfutterproduktes zu erhalten.

Der Begriff "Pilz" bezieht sich also auf den essbaren Fruchtkörper (Sporophor) bestimmter Pilze.

Der hier verwendete Begriff "pflanzliches Protein" bezieht sich auf Lebensmittelprodukte, die durch Reduktion oder Entfernung der wichtigsten Nicht-Protein-Bestandteile (Wasser, Öl, Stärke, andere Kohlenhydrate) aus pflanzlichen Materialien hergestellt werden.

Der hierin verwendete Begriff "tierisches Protein" bezieht sich auf Proteine, die von Wirbeltieren wie Säugetieren, Geflügel und Fischen stammen. Tierisches Eiweiß kann aus Muskelfleisch, Innereien, Sehnen oder Knochen stammen. Das tierische Protein ist am meisten bevorzugt, aber nicht beschränkt auf Fleisch und Innereien von Rind, Huhn, Truthahn, Fasan, Wachtel, Ziege, Schaf, Büffel, Schwein und Kombinationen davon.

Die Geschmacksstoffe sind vorzugsweise ausgewählt aus hydrolysierten pflanzlichen und/oder tierischen proteinhydrolysierten Komponenten, Produkten auf Hefebasis, Gewürzen oder Kombinationen davon, sind aber nicht darauf beschränkt. Der Begriff "Schmackstoffe", wie er hierin verwendet wird, bezieht sich auf Ingredienzsysteme (flüssig und trocken oder eine Kombination aus beiden), die speziell entwickelt wurden, um die Nahrungsaufnahme eines Tieres zu verbessern.

Unter einem Sterilisieren wird im Sinne der Erfindung eine Wärmebehandlung verstanden, die das Nassfutterprodukt technisch keimfrei macht. Die technische Keimfreiheit kann, muss aber nicht eine absolute Keimfreiheit in dem Sinn, dass kein einziger aktiver Keim vorhanden ist, sein, sondern meint eine Keimfreiheit, die für eine festgelegte Zeitdauer (Mindesthaltbarkeit, beispielsweise 6 oder 12 oder 18 oder 24 Monate) unter festgelegten Lagerbedingungen einen unbedenklichen Verzehr mit einer hinreichenden Wahrscheinlichkeit sicherstellt. Die technische Keimfreiheit kann beispielsweise durch einen F-Wert von LOG4 gegeben sein, was bedeutet, dass 99,99% aller ursprünglich vorhandenen Keime in einer Probe inaktiviert worden sind (F-Wert = 3). Unter der Mischung wird jeder Mischungsgrad verstanden. Das Mischen und das Sterilisieren sind insbesondere nicht als getrennte, aufeinander folgende Vorgänge zu verstehen. Vielmehr können das Mischen und das Sterilisieren bzw. die Wärmebehandlung in dem Prozessreaktor gleichzeitig erfolgen. Durch die Zusammenfassung der Schritte des Mischens und Sterilisierens in einem temperierbaren Prozessreaktor kann der Herstellungsprozess für ein Nassfutterprodukt erheblich vereinfacht, verkürzt und energetisch sowie hinsichtlich des Erhalts von Nährstoffen, insbesondere Vitalstoffen, und des Erhalts von Geschmacksstoffen optimiert werden, da die Autoklavierung des fertig abgefüllten Produkts entfällt. Insbesondere kann der Sterilisierungsprozess selbst erheblich verkürzt werden, da er direkt am Produkt im Prozessreaktor erfolgt und nicht erst nach dem Abfüllen. Dies vereinfacht auch einen nachfolgenden Abfüllvorgang. Herkömmlicherweise wird die Soße erst während der Abfüllung zu den festen Bestandteilen zugemischt, was (mindestens) zwei Abfüllstufen erfordert. Wenn das Tierfutterprodukt erfindungsgemäß als fertige Mischung aus dem Prozessreaktor kommt, kann der Abfüllprozess einstufig und kontinuierlich ausgelegt sein. Nach dem Sterilisieren weist die Mischung/das Produkt vorteilhafterweise einen Trockenmasseanteil von ≤ 55 %, insbesondere ca. 35 bis 18 %, und eine Wasseraktivität von ≥ 0,9 auf und stellt daher ein Nassfutterprodukt für Tiere dar. Der Begriff "aseptische Abfüllung", wie er hier verwendet wird, bezieht sich auf einen Vorgang des Abfüllens des sterilisierten nassen Futterprodukts in ein vorsterilisiertes Verpackungsmaterial in Lebensmittelqualität, gefolgt von einer hermetischen Versiegelung. Insbesondere kann der Sterilisierungsprozess selbst erheblich verkürzt werden, da er direkt am Produkt im Prozessreaktor erfolgt und nicht erst nach dem Abfüllen.

Das Verfahren kann ferner aufweisen:
- aseptisches Abfüllen der sterilisierten Mischung in sterile Behälter, wobei die sterilen Behälter vorzugsweise
- Kunststoffbeutel oder Schlauchbeutel oder Folienschlauchbeutel oder Pouchbeutel oder Folienbeutel mit Standboden oder Schalen sind und/oder
- eine Füllmenge von wenigstens 100 g oder wenigstens 200 g oder wenigstens 400 g oder wenigstens 1200 g und/oder von höchstens 2000 g oder höchstens 1200 g der sterilisierten Mischung aufweisen.

Das Verfahren kann ferner aufweisen:
- steriles Versiegeln der sterilen Behälter nach dem Befüllen, wobei das Versiegeln vorzugsweise eine detektierbare Ultraschallversiegelung umfasst, wobei die sterilen Behälter Kunststoffbeutel oder Schlauchbeutel oder Folienschlauchbeutel oder Pouchbeutel oder Folienbeutel mit oder ohne Standboden oder Schalen sind.

Ein Garkocher kann als Prozessreaktor verwendet werden.

Die Wärmebehandlung kann ein Erhitzen auf eine Sterilisierungstemperatur und Halten auf der Sterilisierungstemperatur für eine Sterilisierungsdauer umfassen, wobei die Sterilisierungstemperatur vorzugsweise wenigstens 110°C oder wenigstens 120 °C und/oder höchstens 130 °C oder höchstens 125 °C oder höchstens 122 °C oder höchstens 121 °C beträgt und wobei die Sterilisierungsdauer vorzugsweise höchstens 10 Minuten oder höchstens 5 Minuten oder höchstens 3 Minuten beträgt.

In dem Prozessreaktor kann wenigstens während der Wärmebehandlung ein Druck von wenigstens 1 bar oder wenigstens 2 bar und/oder höchstens 4 bar aufrechterhalten werden.

Der Prozessreaktor kann nach dem Füllen wenigstens für die Zeit der Wärmebehandlung druckfest verschlossen werden.

Das Verfahren kann ferner aufweisen:
- Garen der Mischung in dem Prozessreaktor bei einer Gartemperatur für eine Gardauer vor dem Sterilisieren, wobei die Gartemperatur vorzugsweise höchstens 90 °C oder höchstens 75 °C oder höchstens 60 °C beträgt und wobei die Gardauer vorzugsweise höchstens 40 Minuten oder höchstens 30 Minuten oder höchstens 20 Minuten beträgt und/oder vorzugsweise wenigstens 5 Minuten oder wenigstens 10 Minuten oder wenigstens 15 Minuten beträgt.

Das Verfahren kann ferner wenigstens einen der Schritte aufweisen:
- Zubereiten der Soße mittels Zugebens der Soßenkomponenten zu Wasser und anschließendes Mischen der Soße mit den festen Tiernahrungskomponenten, vorzugsweise unter weiterem Mischen innerhalb des Prozessreaktors.
- Bereitstellen der Soße mittels Dispergierens einer vorbestimmten Menge an Hydrokolloidmischung, der Stärke, des pflanzlichen Proteins, des Pflanzenöls, der Mineralien, der Vitamine, der Geschmacksverstärker in Wasser und ein Mischen der Soßengrundlage für einige Minuten, vorzugsweise für höchstens 10 Minuten oder höchstens 5 Minuten umfasst.

Das Verfahren kann ferner aufweisen:
- Abkühlen der sterilisierten Mischung in dem Prozessreaktor und/oder
- Abkühlen der sterilisierten Mischung vor dem Abfüllen außerhalb des Prozessreaktors und/oder
- Abkühlen der abgefüllten Mischung in den Behältern.

Bei dem Verfahren werden die Komponenten vorzugsweise so zusammengestellt, dass die Inhaltsstoffe der abgefüllten Mischung aufweisen:
- 5 Gew.-% oder mehr, optional 20 Gew.-% oder weniger frische Speisepilze der Gattung Pleurotus
- 10 Gew.-% oder weniger pflanzliches Protein
- 0,1 Gew.-% oder weniger Proteine tierischen Ursprung
- optional 5 Gew.-% oder mehr Gemüse und/oder Obst
- 15 Gew.-% oder weniger einer Stärkequelle
- 2 Gew.-% oder weniger Hydrokolloidmischung
- 10 Gew.-% oder weniger pflanzliches Fett oder Öl
- 0,5 Gew.-% Samen
- Mineral- und Vitaminvormischung (1-2 Gew.-%) und Geschmacksverstärker (0,5-2 Gew.-%), Rest Wasser und/oder Brühe (30-50 Gew.-%)
oder
- 5 Gew.-% oder mehr, optional 20 Gew.-% oder weniger frische Speisepilze der Gattung Pleurotus,
- 0,1 Gew.-% oder weniger pflanzliches Protein
- 20-30 Gew.-% tierische Proteine
- optional 5 Gew.-% oder mehr Gemüse und/oder Obst
- 15 Gew.-% oder weniger eine Stärkequelle
- 2 Gew.-% oder weniger Hydrokolloidmischung
- 0,1 Gew.-% oder weniger pflanzliches Fett oder Öl
- 0,5 Gew.-% Samen
- Mineral- und Vitaminvormischung (1-2 Gew.-%) und Geschmacksverstärker (0,5-2 Gew.-%), Rest Wasser und/oder Brühe (30-50 Gew.-%).

Das Verfahren zur Herstellung des Nassfutterprodukts für Tiere, insbesondere Haustiere, erfolgt also unter Verwendung von essbaren Pilzen und weist in einer vorteilhaften Ausführungsform die folgenden Schritte auf:
- Zerkleinern von Speisepilzen auf eine Partikelgröße, die im Wesentlichen der Partikelgröße von Hackfleisch entspricht,
- Skalieren der gemahlenen Pilze auf eine vorbestimmte Menge und Vermischen der gemahlenen Pilze mit anderem Gemüse und/oder anderen Zutaten zur Herstellung einer nichtwässrigen Komponente,
- Vermischen von kaltem Wasser unter Scherung mit einer Hydrokolloidmischung, Stärke, pflanzlichen Proteinen, Öl, Vitaminen, Mineralien und Geschmacksstoffen zur Bildung einer wässrigen Komponente,
- Vermischen von wässrigen und nichtwässrigen Komponenten miteinander und Zuführen dieser Mischung in einen Behälter des Prozessreaktors in Form eines Garkochers,
- Garen der Mischung unter feuchten Bedingungen bei im Wesentlichen 90 °C für 15 bis 25 Minuten unter Unterdruck von 0,3 bis 0,5 bar, der in dem Garkocher aufgebaut ist, unter ständigem Rühren,
- nach Abschluss des Garens Sterilisieren der Mischung in demselben Behälter bei 120 °C oder mehr für 3 Minuten unter Druck von 1 bis 2 bar, optional auch zwischen 2 und 3 bar,
- nach der Sterilisation Abfüllen der Mischung aseptisch nach Gewicht in vorgeformte Beutel, wobei ein einphasiges Heiß- oder Kaltabfüllverfahren bei 80 bis 85 °C oder weniger verwendet wird,
- Herstellen eines Phasenübergangs der homogenen Masse der Mischung von hochviskoser zu halbfester kohäsiver Masse beim Abfüllen, wobei die Masse durch hitzereversible Biopolymere strukturiert wird und eine Form der Verpackung annimmt.

Der Begriff "Zerkleinern", bezieht sich auf den Vorgang des Zerkleinerns oder Mahlens von Lebensmitteln in sehr kleine Stücke, typischerweise unter Verwendung einer Maschine.

Der Begriff "Kohäsion" steht für die strukturelle Integrität eines Lebensmittelprodukts und bezieht sich auf eine Eigenschaft, die durch die Stärke der inneren Bindung gekennzeichnet ist, die den Körper eines Lebensmittelprodukts ausmacht.

Der Begriff "Garen" oder "Garkochen" bezieht sich auf eine Energieübertragung von einer Wärmequelle auf Lebensmittel. Diese Energie verändert die Molekularstruktur des Lebensmittels und verändert somit den Geschmack, das Aroma und das Aussehen von Lebensmitteln.

Es wird somit ein Verfahren bereitgestellt, das ein Nassfutterprodukt für Tiere, insbesondere Haustiere, herstellen kann, das aus in großen Mengen verfügbaren Rohstoffen hergestellt werden kann, welches qualitativ hochwertig, schmackhaft, hygienisch sicher ist und sich auch durch eine vergleichbare Textur und ein ähnliches Nährstoffprofil wie Nassfutter für Haustiere auf Fleischbasis auszeichnet, wobei das Herstellungsverfahren wenig arbeits- und zeitintensiv, kostengünstig, eine gute Ernergiebilanz aufweisend und wenig umweltbelastend ist, und eine entsprechende Vorrichtung zur Herstellung eines Nassfutterprodukts bereitzustellen.

Ein weiterer Gesichtspunkt der Erfindung betrifft ein Nassfutterprodukt für Tiere, insbesondere Haustiere, das durch das oben genannte Verfahren hergestellt ist. Das Nassfutterprodukt besitzt die Vorteile des oben beschriebenen Verfahrens, es zeichnet sich daher auch durch einen verbesserten Nährstoffgehalt und Geschmack aus, es kann darüber hinaus kostengünstiger sein und eine verbesserte Energiebilanz aufweisen.

Ein weiterer Gesichtspunkt der Erfindung betrifft eine Vorrichtung zur Herstellung eines Nassfutterprodukts für Tiere, insbesondere Haustiere, wobei die Vorrichtung aufweist:
einen Prozessreaktor, der zur Aufnahme fester Tiernahrungskomponenten und einer Soße oder Soßenkomponenten ausgebildet ist,
eine Temperiereinrichtung, die zum Temperieren des Prozessreaktors, insbesondere von Wänden des Prozessreaktors, ausgebildet ist,
eine Mischeinrichtung, die zum Mischen der im Prozessreaktor befindlichen Komponenten eingerichtet ist, und
eine Steuereinrichtung, welche zum Steuern der Mischeinrichtung, um die Komponenten in dem Prozessreaktor zu vermischen, und zum Steuern der Temperiereinrichtung, um die Komponenten oder die Mischung in dem Prozessreaktor durch Wärmebehandlung zu sterilisieren, ausgebildet und konfiguriert ist.

In vorteilhafter Ausführungsform weist die Vorrichtung auf:
den Prozessreaktor, der zur Aufnahme fester Tiernahrungskomponenten, die Speisepilze und pflanzliches und/oder tierisches Protein umfassen, und einer Soße oder Soßenkomponenten, und optional weiteren Komponenten, die Stärke, insbesondere in Form einer Stärkequelle, Öl, insbesondere Pflanzenöl, Mineralstoffe, Vitamine und Geschmacksverstärker umfassen, ausgebildet ist,
die Temperiereinrichtung, die zum Temperieren des Prozessreaktors, insbesondere von Wänden des Prozessreaktors, ausgebildet ist,
die Mischeinrichtung, die zum Mischen der im Prozessreaktor befindlichen Komponenten derart eingerichtet ist, dass die Mischung 5 bis 20 Gew.-% Speisepilze und entweder ≤ 10 Gew.-% pflanzliche Proteine oder 20 bis 30 Gew.-% tierische Proteine aufweist, und
die Steuereinrichtung, welche zum Steuern der Mischeinrichtung, um die Komponenten in dem Prozessreaktor zu vermischen, und zum Steuern der Temperiereinrichtung, um die Komponenten oder die Mischung in dem Prozessreaktor durch Wärmebehandlung zu sterilisieren, derart ausgebildet und konfiguriert ist, dass nach dem Sterilisieren die Mischung einen Trockenmasseanteil von ≤ 55 %, insbesondere ca. 35 bis 18 %, und eine Wasseraktivität von ≥ 0,9 aufweist.

Eine solche Vorrichtung kann ein Nassfutterprodukt mit den oben genannten Vorteilen hinsichtlich Produktqualität als Fleischersatzprodukt oder flexitarisches Produkt und Prozesseffizienz ermöglichen.

Der Prozessreaktor kann als Garkocher ausgeführt sein. Die Temperierung des Prozessreaktors kann über Wärmeplatten erfolgen. In der Vorrichtung kann dementsprechend die Temperiereinrichtung Wärmeplatten aufweisen. Die Wärmeplatten können Bestandteil des Prozessreaktors sein. Die Temperierung über Wärmeplatten ist konstruktiv besonders einfach und gut zu steuern. Ferner kann die Wärmebehandlung besonders direkt auf die Mischung einwirken. Dadurch können Erwärmungsphasen verkürzt und die Sterilisierungstemperatur zuverlässig und mit geringem Energieaufwand aufrechterhalten werden. Nährstoffgehalt, Geschmack, Hygiene und Energiebilanz des Produkts können weiter verbessert und die Kosten geringer sein. Alternativ kann die Temperierung auch über indirekten oder direkten Dampf erfolgen.

Im Rahmen des hier beanspruchten Verfahrens ist vorzugsweise ein aseptisches Abfüllen der sterilisierten Mischung in sterile Behälter vorgesehen. Dabei kann auch ein steriles Versiegeln der sterilen Behälter nach dem Befüllen vorgesehen sein. Das Versiegeln kann eine detektierbare Ultraschallversiegelung umfassen. Dadurch kann auch eine durchgängig aseptische Behandlung der im Prozessreaktor sterilisierten Mischung bis zur Abfüllung gewährleistet werden. So kann eine Belastung durch Keime vor der Abfüllung vermieden werden. Dies stellt auch sicher, dass eine erneute Sterilisierung nach dem Abfüllen entbehrlich ist.

Mit anderen Worten, das Nassfutterprodukt kann die sterilisierte Mischung in sterile Behälter abgefüllt aufweisen. Die sterilen Behälter können eine steril hergestellte Versiegelung, insbesondere eine detektierbare Ultraschallversiegelung aufweisen. Ein solches Produkt ist besonders sicher und, da eine Autoklavierung entfällt, auch besonders nährstoffreich, schmackhaft, günstig und energiesparend.

Die Vorrichtung kann entsprechend eine Abfüllstation, die zum aseptischen Abfüllen der sterilisierten Mischung aus dem Prozessreaktor in sterile Behälter ausgebildet ist, aufweisen. Die Abfüllstation kann eine Versiegelungseinheit zum sterilen Versiegeln der sterilen Behälter nach dem Befüllen, vorzugsweise durch eine detektierbare Ultraschallversiegelung umfassen.

Die Vorrichtung kann ferner eine Prüfeinheit zum Prüfen des in einem sterilen Behälter abgefüllten und versiegelten Tiernahrungsprodukts aufweisen, wobei die Prüfeinheit ausgebildet ist, einzelne Behälter hinsichtlich Gewichts und/oder Dichtigkeit und/oder Nahtgüte zu prüfen. Die Prüfeinheit kann in der Abfüllstation integriert oder ihr nachgeschaltet sein.

Die sterilen Behälter sind vorzugsweise Kunststoffbeutel oder Schlauchbeutel oder Folienschlauchbeutel oder Pouchbeutel oder Folienbeutel mit oder ohne Standboden oder Schalen. All diese Behälterarten eignen sich durch die vorstehend beschriebene Abfüllung und sind zudem besonders leicht und für den Verbraucher gut zu handhaben. Die sterilen Behälter können beispielsweise eine Folie aus lebensmittelechtem Kunststoff wie etwa PET, PE-HD, PE-LD, PP ohne Weichmacher oder mit lebensmittelechtem Weichmacher aufweisen. Diese Materialen haben sich für die Aufnahme von Lebensmitteln bewährt. Die sterilen Behälter können auch eine antimikrobielle, lebensmittelechte Beschichtung aufweisen. Vorzugsweise sind die sterilen Behälter wenigstens teilweise, insbesondere vollständig, aus recyclingfähigem Material, insbesondere aus Mono-PP, hergestellt.

Bevorzugt weisen die sterilen Behälter eine Füllmenge von wenigstens 100 g oder wenigstens 200 g oder wenigstens 400 g oder wenigstens 1200 g und/oder oder höchstens 2000 g oder höchstens 1200 g der sterilisierten Mischung auf.

Das Nassfutterprodukt kann die folgenden Inhaltsstoffe der abgefüllten Mischung in einer ersten Ausführungsform mit
- 5 Gew.-% oder mehr, optional 20 Gew.-% oder weniger frische Speisepilze der Gattung Pleurotus
- 10 Gew.-% oder weniger pflanzliches Protein
- 0,1 Gew.-% oder weniger Proteine tierischen Ursprungs
- optional 5 Gew.-% oder mehr Gemüse und/oder Obst
- 15 Gew.-% oder weniger einer Stärkequelle
- 2 Gew.-% oder weniger Hydrokolloidmischung
- 10 Gew.-% oder weniger pflanzliches Fett oder Öl
- 0,5 Gew.-% Samen
- Mineral- und Vitaminvormischung (1-2 Gew.-%) und Geschmacksverstärker (0,5-2 Gew.-%), Rest Wasser und/oder Brühe (30-50 Gew.-%)
und in einer zweiten Ausführungsform mit
- 5 Gew.-% oder mehr, optional 20 Gew.-% oder weniger frische Speisepilze der Gattung Pleurotus,
- 0,1 Gew.-% oder weniger pflanzliches Protein
- 20-30 Gew.-% tierische Proteine
- optional 5 Gew.-% oder mehr Gemüse und/oder Obst
- 15 Gew.-% oder weniger eine Stärkequelle
- 2 Gew.-% oder weniger Hydrokolloidmischung
- 0,1 Gew.-% oder weniger pflanzliches Fett oder Öl
- 0,5 Gew.-% Samen
- Mineral- und Vitaminvormischung (1-2 Gew.-%) und Geschmacksverstärker (0,5-2 Gew.-%), Rest Wasser und/oder Brühe (30-50 Gew.-%)
aufweisen.

Das Nassfutterprodukt kann schließlich durch die folgenden Schritte hergestellt werden:
- Zerkleinern der Speisepilze auf eine Partikelgröße, die im Wesentlichen der Partikelgröße von Hackfleisch entspricht, insbesondere einer Lochgröße von 2-8 mm,
- Skalieren der gemahlenen Pilze auf eine vorbestimmte Menge und Vermischen der gemahlenen Pilze mit anderem Gemüse und/oder anderen Zutaten zur Herstellung einer nichtwässrigen Komponente,
- Vermischen von kaltem Wasser unter Scherung mit einer Hydrokolloidmischung, Stärke, pflanzlichen Proteinen, Öl, Vitaminen, Mineralien und Geschmacksstoffen zur Bildung einer wässrigen Komponente,
- Vermischen von wässrigen und nichtwässrigen Komponenten miteinander und Zuführen dieser Mischung in einen Behälter des Prozessreaktors (102) in Form eines Garkochers,
- Garen der Mischung unter feuchten Bedingungen bei im Wesentlichen 90 °C für 15 bis 25 Minuten unter Unterdruck von 0,3 bis 0,5 bar, insbesondere bis 0,7 bar, der in dem Garkocher aufgebaut ist, unter ständigem Rühren,
- nach Abschluss des Garens Sterilisieren der Mischung in demselben Behälter bei 120 °C oder mehr für 3 Minuten unter Druck von 1 bis 2 bar, optional auch zwischen 2 und 3 bar,
- nach der Sterilisation Abfüllen der Mischung aseptisch nach Gewicht in vorgeformte Beutel, wobei ein einphasiges Heiß- oder Kaltabfüllverfahren bei 80 bis 85 °C oder weniger verwendet wird,
- Herstellen eines Phasenübergangs der homogenen Masse der Mischung von hochviskoser zu halbfester kohäsiver Masse beim Abfüllen, wobei die Masse durch hitzereversible Biopolymere strukturiert wird und eine Form der Verpackung annimmt.

Der Begriff "Gemüse" bezieht sich auf eine Pflanze oder einen Teil einer Pflanze, eine Wurzel, einen Samen oder eine Schote, die von Menschen oder Tieren als Nahrung verzehrt werden. Das Gemüse kann vorzugsweise aus Karotten, Erbsen, Kartoffeln, Süßkartoffeln, Kürbis, Zucchini, Spinat ausgewählt werden, ist aber nicht darauf beschränkt.

Der Begriff "Obst" bezieht sich auf den fleischigen oder trocken gereiften Eierstock einer blühenden Pflanze, die süß und entweder saftig oder fleischig ist und den Samen oder die Samen umschließt. Die Früchte dieser Pflanze können vorzugsweise ausgewählt werden aus Äpfeln, Heidelbeeren, Maulbeeren, Johannisbeeren, Preiselbeeren, Mango, Ananas, sind aber nicht darauf beschränkt.

Der Begriff "Samen" bezieht sich auf den kleinen, harten Teil einer Pflanze, aus dem eine neue Pflanze wächst. Die Samen können vorzugsweise aus Chiasamen, Sonnenblumenkernen, Kürbiskernen, Leinsamen, Hanfsamen, Sesamsamen ausgewählt werden, sind aber nicht darauf beschränkt.

Der Begriff "pflanzliches Fett oder Öl" bezieht sich auf eine Mischung von Triglyceriden, die aus Pflanzensamen oder anderen Teilen von Früchten oder Algen extrahiert werden. Das pflanzliche Fett oder Öl kann vorzugsweise aus Sonnenblumenöl (mit hohem Ölsäuregehalt), Rapsöl, Sojabohnenöl, Leinöl, Olivenöl, Kokosnussöl, Maisöl, Erdnussöl, Omega-3 ausgewählt werden, ist aber nicht darauf beschränkt Algenöl und Kombinationen davon. Das Pflanzenfett oder -öl kann natürliche Antioxidantien wie Tocopherole, Flavonoide, Phenole und Phenolsäure aus Pflanzenextrakten und Kräutern enthalten.

Der Begriff "Brühe" bezieht sich auf einen Geschmacksbestandteil, der aus dem Kochen von pflanzlichen Proteinquellen und/oder Gemüse resultiert. Es kann in flüssiger, gelförmiger oder getrockneter Form verwendet werden.

Die Begriffe "Stärke" und "Hydrokolloide" beziehen sich auf eine Gruppe langkettiger Polymere oder Polysaccharide oder Kohlenhydrate, die durch ihre Eigenschaft gekennzeichnet sind, viskose Dispersionen und/oder Gele zu bilden, wenn sie in Wasser dispergiert werden. Die Stärkequelle kann vorzugsweise ausgewählt werden aus Mais, Weizen, Kartoffeln, Tapioka oder Kohlenhydratquellen wie Nudeln, Reis, Kartoffeln, Süßkartoffeln, Erbsen und Kombinationen davon. Die Hydrokolloide können vorzugsweise ausgewählt werden aus Algenextrakten, Galaktomannanen, bakteriellen Hydrokolloiden, aus Zitrusschalen und Äpfeln extrahierten Pektinsubstanzen, Pflanzenfasern.Die Hydrokolloide sind am bevorzugtesten Agar-Agar, Carrageenan, Johannisbrotkernmehl, Guarkernmehl, Xanthangummi, Pektin, Zitrusfaser, Apfelfaser, Haferfaser, Karottenfaser und Gelan.

Die Wärmebehandlung kann ein Erhitzen auf eine Sterilisierungstemperatur und Halten auf der Sterilisierungstemperatur für eine Sterilisierungsdauer umfassen, wobei die Sterilisierungstemperatur vorzugsweise wenigstens 110°C oder wenigstens 120 °C und/oder höchstens 130 °C oder höchstens 125 °C oder höchstens 122 °C oder höchstens 121 °C beträgt und wobei die Sterilisierungsdauer vorzugsweise höchstens 10 Minuten oder höchstens 5 Minuten oder höchstens 3 Minuten beträgt. Damit kann die Sterilisierungstemperatur auf einem Wert gewählt werden, der ein hygienisch einwandfrei sterilisiertes Nassfutterprodukt gewährleistet, und die Sterilisierungsdauer kann kurz gehalten werden, um Nährstoffgehalt und Geschmack im fertigen Nassfutterprodukt so gering wie möglich zu beeinträchtigen. In der Vorrichtung kann die Steuereinrichtung ausgebildet und konfiguriert sein, die Temperiereinrichtung derart zu steuern, dass die Komponenten oder die Mischung in dem Prozessreaktor auf eine Sterilisierungstemperatur mit den oben genannten Grenzen gebracht und auf der Sterilisierungstemperatur für eine Sterilisierungsdauer mit den oben genannten Grenzen gehalten wird.

Ein Druck in dem Prozessreaktor wenigstens während der Wärmebehandlung kann wenigstens 1 bar oder wenigstens 2 bar und/oder höchstens 4 bar betragen. In der Vorrichtung kann die Steuereinrichtung ausgebildet und konfiguriert sein, um einen Druck in dem Prozessreaktor wenigstens während der Wärmebehandlung mit den oben genannten Grenzen zu halten. Ferner kann der Prozessreaktor hermetisch und druckfest, insbesondere bis zu 1 bar oder 2 bar oder 3 bar oder 4 bar Überdruck, verschließbar sein. Unter Druckgaren wird verstanden, dass das Kochen in einem hermetisch verschlossenen Gefäß über die Siedetemperatur des Wassers hinaus erhitzt und dabei dem aufsteigenden und in dem zirkulierenden Behälter ausgesetzt. Dabei wird bei Überdruck das Wasser bis 125°C erhitzt.

Im Rahmen des hier beanspruchten Verfahrens ist vorzugsweise vor dem Sterilisieren ein Garen der Mischung in dem Prozessreaktor bei einer Gartemperatur für eine Gardauer vorgesehen, wobei die Gartemperatur vorzugsweise höchstens 90 °C, besonders vorzugsweise höchstens 95 °C, oder höchstens 75 °C oder höchstens 60 °C beträgt und wobei die Gardauer vorzugsweise höchstens 40 Minuten oder höchstens 30 Minuten oder höchstens 20 Minuten beträgt und/oder vorzugsweise wenigstens 5 Minuten oder wenigstens 10 Minuten oder wenigstens 15 Minuten beträgt. Unter einem Garen wird im Sinne der Erfindung eine Wärmebehandlung verstanden, die das Nassfutterprodukt verzehrfertig im Hinblick auf Geschmack, Konsistenz, Verdaulichkeit und/oder gesundheitliche Wirkung macht. Der Garvorgang kann zur Reduzierung der Keimbelastung mit beitragen (Vorsterilisierung), und der Sterilisierungsvorgang kann zum Garprozess mit beitragen (Nachgarung). Wiederum ist zu verstehen, dass das Garen und Mischen gleichzeitig erfolgen können. Somit können die drei Vorgänge des Mischens, Garens und Sterilisierens in einem Zug im gleichen Prozessreaktor durchgeführt werden. Dies ermöglicht eine besonders effiziente Temperaturführung, kurze und schonende Verarbeitungsdauer und minimierten Energieeinsatz. Prozessunterbrechungen durch Transport- oder Förderphasen können entfallen oder auf das unvermeidliche maß (Lager-Reaktor und Reaktor-Abfüllung) reduziert werden. Ein Nassfutterprodukt, das dieses Verfahren durchlaufen hat, zeichnet sich durch besonders gut erhaltenen Nährstoffgehalt, hohe Schmackhaftigkeit, geringen Herstellungsaufwand und eine gute Energiebilanz aus.

Das Mischen kann unter Zugabe weiterer flüssiger und/oder gelartiger und/oder pulveriger und/oder stückiger Zusatzstoffe, beispielsweise Geschmacksstoffe oder Schmackstoffe, erfolgen. Die festen Tiernahrungskomponenten können dem Prozessreaktor über einen Trichter und/oder einen (oder mehrere) Schneckenförderer zugeführt werden. Eine Trichterzuführung ermöglicht die rasche Befüllung mit großen Mengen Füllgut. Ein Schneckenzuführung ermöglicht eine kontinuierliche Zuführung aus einem Lagerbehälter unter Luftabschluss und kann eine Automatisierung verbessern. Ferner kann ein kontinuierliches Zuführen der festen Tiernahrungskomponenten und/oder der Soße oder der Soßenkomponenten und/oder weiterer Komponenten dem Prozessreaktor von jeweiligen Lagerbehältern vorgesehen sein. Die Soße oder die Soßenkomponenten und/oder weiterer Komponenten können dem Prozessreaktor getrennt von den Tiernahrungskomponenten zugeführt werden. Selbstverständlich können bestimmte Bestandteile, etwa die Soße, vorab zusammengestellt und gemischt werden. Auch die festen Tiernahrungsbestandteile können gemäß Rezeptur vorab gemischt werden. Die vorgemischten Chargen können dann dem Prozessreaktor zugeführt werden. Ein geeignetes Zusammenspiel all dieser Maßnahmen ermöglicht eine genaue und flexible Dosierung der verschiedenen Komponenten wie auch eine unkomplizierte Verwirklichung individueller Rezepturen.

Eine Nassfutterprodukt, das nach den vorstehenden Gesichtspunkten hergestellt ist, weist eine hohe Reproduzierbarkeit bei hoher Flexibilität der Rezeptur und der Einzelbestandteile auf. Die Maßnahmen tragen zu einer hohen Automatisierung und damit zu Kostenvorteilen bei.

Ein Zubereiten der Soße kann mittels Zugebens der Soßenkomponenten zu Wasser und anschließendes Mischen der Soße mit den festen Tiernahrungskomponenten, vorzugsweise unter weiterem Mischen innerhalb des Prozessreaktors erfolgen. Das Bereitstellen der Soße kann ein Dispergieren einer vorbestimmten Menge an Hydrokolloidmischung, der Stärke, des pflanzlichen Proteins, des Pflanzenöls, der Mineralien, der Vitamine, der Geschmacksverstärker in Wasser und ein Mischen der Soßengrundlage für einige Minuten, vorzugsweise für höchstens 10 Minuten oder höchstens 5 Minuten umfassen. Die Vorrichtung kann ferner eine Vormischstation zum Mischen der Soßenkomponenten aufweisen, wobei die Vormischstation vorzugsweise fluidisch mit dem Prozessreaktor verbunden ist.

Der Prozessreaktor kann Zuführelemente aufweisen, die zum Zuführen weiterer Komponenten wie etwa weiterer flüssiger und/oder gelartiger und/oder pulveriger und/oder stückiger Tiernahrungskomponenten und/oder Zusatzstoffe, beispielsweise Geschmacksstoffe, während eines Verschlusszustands des Prozessreaktors, insbesondere während eines Überdruckzustands des Prozessreaktors, aufweist. Auch kann die Vorrichtung eine Vorratslagerstation mit Lagerbehältern zum Lagern der festen Tiernahrungskomponenten und/oder der Soße oder der Soßenkomponenten und/oder weiterer Komponenten aufweisen. Ferner kann die Vorrichtung Transporteinrichtungen zum kontinuierlichen oder diskontinuierlichen Zuführen der festen Tiernahrungskomponenten und/oder der Soße oder der Soßenkomponenten und/oder weiterer Komponenten dem Prozessreaktor von jeweiligen Lagerbehältern aufweisen.

Wenn die Mischung in dem Prozessreaktor sterilisiert ist, kann sie durch kontinuierliches oder chargenweises Fördern oder Transportieren einer Abfüllung zugeführt werden.

Die sterilisierte Mischung kann in dem Prozessreaktor abgekühlt werden. Die Abkühlung kann für die Zwecke der nachfolgenden Handhabung und/oder zur Einstellung bestimmter Eigenschaften, etwa eine gewisse Verfestigung, der Mischung erfolgen. Hierzu kann die Steuereinrichtung ausgebildet und konfiguriert sein, den Prozessreaktor so zu temperieren, dass eine vorgegebene Entnahmetemperatur oder Reifetemperatur erreicht und gegebenenfalls für eine vorgegebene Reifedauer aufrechterhalten wird.

Zusätzlich oder alternativ kann die sterilisierte Mischung vor dem Abfüllen außerhalb des Prozessreaktors abgekühlt werden. Hierfür kann eine dedizierte Abkühlstation vorgesehen sein oder eine Förder- oder Transporteinrichtung kann zum Kühlen der Mischung ausgebildet sein. Eine weitere Abkühlung kann nach dem Abfüllen vorgesehen sein.

Weitere Merkmale und Vorteile der Erfindung ergeben sich aus der nachfolgenden detaillierten Beschreibung eines Ausführungsbeispiels der Erfindung, aus den Ansprüchen sowie anhand der Figuren der Zeichnung, die erfindungswesentliche Einzelheiten zeigt. Die in der Zeichnung gezeigten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein. In den Figuren bezeichnen gleiche Bezugszeichen gleiche oder sich entsprechende Elemente.

Es zeigen:
- Fig. 1: ein schematisches Blockschaubild einer Vorrichtung zur Herstellung eines Nassfutterprodukts gemäß einem Ausführungsbeispiel der Erfindung;
- Fig. 2: ein Ablaufdiagramm eines Verfahrens, das mit der Vorrichtung durchgeführt werden kann.

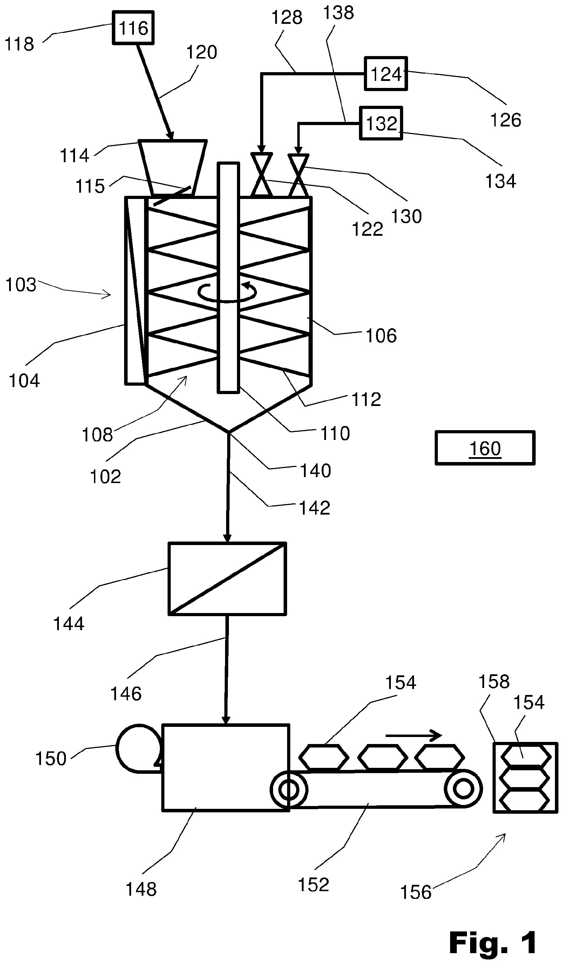

Ein Ausführungsbeispiel der Erfindung ist eine Vorrichtung zur Herstellung eines Nassfutterprodukts für Tiere, insbesondere Haustiere. Eine solche Vorrichtung ist in Fig. 1 schematisch dargestellt.

Die Vorrichtung weist einen Prozessreaktor 102 auf. Der Prozessreaktor 102 ist temperierbar und kann als Garkocher ausgeführt sein. Zur Temperierung kann eine oder können mehrere Wärmeplatten 104 vorgesehen sein, von welchen hier nur eine dargestellt ist. Die Wärmeplatte 104 ist angeordnet und ausgebildet, um eine Wandung 106 des Prozessreaktors 102 zu kontaktieren, um diese zu temperieren. Die Wärmeplatte 104 kann durch ein Wärmeträgerfluid, etwa Wasser oder Öl, durchflossen sein, welches seinerseits über eine geeignete Temperieranlage temperierbar ist (nicht näher dargestellt). Es sind aber auch andere Temperierungssysteme, etwa elektrisch, denkbar. Es versteht sich, dass die Wärmeplatte 104 nur ein Beispiel einer Temperiereinrichtung 103 zur Temperierung des Prozessreaktors 102 ist. So kann beispielsweise die Wandung 106 selbst hohl ausgebildet und von einem Wärmeträgerfluid durchflossen sein.

In dem Prozessreaktor 102 ist eine Mischeinrichtung 108 angeordnet. Die Mischeinrichtung kann eine zentrale Welle 110 und mehrere Mischblätter 112 aufweisen, die an der Welle 110 angebracht sind. Die Welle 110 ist mit einem nicht näher dargestellten Antrieb verbunden, der die Welle 110 in Drehung versetzen kann, wodurch die Mischblätter 112 im Inneren des Prozessreaktors 102 rotieren können. Die Mischblätter 112 können als Schaber ausgebildet sein, die an der Innenseite der Wandung 106 des Prozessreaktors 102 entlangschaben, um dort angesetzte Materialien abzukratzen und wieder in den Innenraum des Prozessreaktors 102 zu leiten. Ein solcher Prozessreaktor 102 in Form eines Kratzwärmetauschers ist an sich bekannt. Es versteht sich, dass, obschon der Prozessreaktor 102 mit vertikaler Welle 110 und vier in einer horizontalen Ebene rotierenden Mischblättern 112 dargestellt ist, jede bekannte oder denkbare Variante eines Kratzwärmetauschers als Ausführungsform eines Garkochers eingesetzt werden kann, solange die nachstehend beschriebenen Prozesse durchgeführt werden können.

Der Prozessreaktor 102 weist eine erste Zuführungseinrichtung 114 auf, welche in diesem Ausführungsbeispiel die Form eines Trichters aufweist. Die erste Zuführungseinrichtung 114 dient der Zuführung einer festen Futterkomponente 116, die Speisepilze und pflanzliches und/oder tierisches Protein umfasst. Die feste Futterkomponente 116 kann in einem ersten Lagerbehälter 118 gelagert sein. Der erste Lagerbehälter 118 kann über eine erste Fördereinrichtung 120 mit der ersten Zuführungseinrichtung 114 verbunden sein. Diese erste Fördereinrichtung 120 kann beispielsweise ein Kippwagen oder ein Förderband oder ein manuell beförderter Eimer oder dergleichen sein. Die erste Zuführungseinrichtung 114 ist durch eine Klappe 115 verschließbar. Es sei erwähnt, dass anstelle des Trichters auch eine Öffnung als erste Zuführeinrichtung vorgesehen sein kann, in welche ein Schneckenförderer oder dergleichen als erste Fördereinrichtung 120 mündet. Es versteht sich, dass nur aus Gründen der Vereinfachung nur eine feste Futterkomponente 116 dargestellt ist. Es können weitere feste Futterkomponenten in weiteren Lagerbehältern vorgehalten und über weitere oder die gleiche Fördereinrichtung mit der ersten Zuführungseinrichtung 114 verbunden sein.

Der Prozessreaktor 102 weist eine zweite Zuführungseinrichtung 122 auf, welche in diesem Ausführungsbeispiel die Form eines Fluidanschlusses aufweist. Die zweite Zuführungseinrichtung 122 dient der Zuführung einer Soße 124. Die Soße 124 kann durch ein Dispergieren einer vorbestimmten Menge an Hydrokolloidmischung, Stärke, pflanzlichen Protein, Pflanzenöl, Mineralien, Vitamine, Geschmacksverstärker in Wasser und durch ein Mischen der Soßengrundlage für einige Minuten, vorzugsweise für höchstens 10 Minuten oder höchstens 5 Minuten beispielsweise in der Vormischstation bereitgestellt sein. Die Soße 124 kann in einem zweiten Lagerbehälter 126 gelagert sein. Der zweite Lagerbehälter 126 kann über eine zweite Fördereinrichtung 128 mit der zweiten Zuführungseinrichtung 122 verbunden sein. Diese zweite Fördereinrichtung 128 kann beispielsweise eine Leitung mit einer Pumpe (nicht näher dargestellt) sein. Die zweite Zuführungseinrichtung 122 ist in an sich bekannter Weise verschließbar. Es versteht sich, dass nur aus Gründen der Vereinfachung nur eine einzige Soße 124 dargestellt ist. Es können weitere Soßen oder einzelne Soßenkomponenten in weiteren Lagerbehältern vorgehalten und über weitere oder die gleiche Fördereinrichtung mit der zweiten Zuführungseinrichtung 122 verbunden sein. Die zweite(n) Fördereinrichtung(en) kann/können eine Vormischstation umfassen, in welcher mehrere Soßenkomponenten entsprechend einer Rezeptur vorgemischt und direkt zu der zweiten Zuführungsvorrichtung 122 gefördert oder in Zwischenbehältern zwischengelagert werden. Die Soße 124 symbolisiert somit jede mögliche Sammlung von Einzelkomponenten und/oder Mischungen, die über die zweite Zuführungseinrichtung 122 dem Prozessreaktor 102 zugeführt werden können. Es können auch mehrere zweite Zuführungseinrichtungen 122 für unterschiedliche Soßen oder Soßenkomponenten vorgesehen sein.

Der Prozessreaktor 102 weist optional eine dritte Zuführungseinrichtung 130 auf, welche in diesem Ausführungsbeispiel die Form eines Fluidanschlusses aufweist. Die dritte Zuführungseinrichtung 130 dient der Zuführung einer weiteren flüssigen oder pastösen oder gallertigen oder öligen Komponente 132, die Stärke, insbesondere in Form einer Stärkequelle, Öl, insbesondere Pflanzenöl, Mineralstoffe, Vitamine und Geschmacksverstärker umfassen kann. Die weitere Komponente 132 kann in einem dritten Lagerbehälter 134 gelagert sein. Der dritte Lagerbehälter 134 kann über eine dritte Fördereinrichtung 138 mit der dritten Zuführungseinrichtung 130 verbunden sein. Diese dritte Fördereinrichtung 130 kann beispielsweise eine Leitung mit einer Pumpe (nicht näher dargestellt) sein. Die dritte Zuführungseinrichtung 130 ist in an sich bekannter Weise verschließbar. Es versteht sich, dass nur aus Gründen der Vereinfachung nur eine weitere Komponente 132 dargestellt ist. Es können weitere Komponenten in weiteren Lagerbehältern vorgehalten und über weitere oder die gleiche Fördereinrichtung mit der dritten Zuführungseinrichtung 130 verbunden sein. Die dritte(n) Fördereinrichtung(en) kann/können eine Vormischstation umfassen, in welcher mehrere weitere Komponenten entsprechend einer Rezeptur vorgemischt und direkt zu der dritten Zuführungsvorrichtung 130 gefördert oder in Zwischenbehältern zwischengelagert werden. Die Komponente 132 symbolisiert somit jede mögliche Sammlung von Einzelkomponenten und/oder Mischungen, die über die dritte Zuführungseinrichtung 130 dem Prozessreaktor 102 zugeführt werden können. Es können auch mehrere dritte Zuführungseinrichtungen 130 für unterschiedliche Komponenten oder Vormischungen vorgesehen sein. Wenn die/eine weitere Komponente Wasser ist, kann der Behälter 134 durch einen Wasserleitungsanschluss ersetzt werden. In dem Prozessreaktor 102 erfolgt das Mischen derart, dass die Mischung 5 bis 20 Gew.-% Speisepilze und entweder ≤ 10 Gew.-% pflanzliche Proteine oder 20 bis 30 Gew.-% tierische Proteine aufweist. Außerdem erfolgt in dem Prozessreaktor 102 ein Sterilisieren der Mischung durch Wärmebehandlung, z. B. mittels der Wärmeplatten 104, derart, dass nach dem Sterilisieren die Mischung einen Trockenmasseanteil von ≤ 55 %, insbesondere ca. 35 bis 18 %, und eine Wasseraktivität von ≥ 0,9 aufweist.

Der Prozessreaktor 102 weist einen Auslass 140 auf. Der Auslass 140 ist optional über eine vierte Fördereinrichtung 142 mit einer Nachkühlstation 144 verbunden. Die vierte Fördereinrichtung 142 kann eine Rohrleitung, ggf. mit einer Pumpe (nicht näher dargestellt), oder eine Transportwagenstrecke oder ein Förderband mit Zwischenbehältern oder dergleichen sein. Die Nachkühlstation 144 kann je nach Art der vierten Fördereinrichtung 142 ein Durchlaufwärmetauscher, eine kontinuierlich durchlaufene Kühlkammer, eine chargenweise beschickbare Kühlkammer/Kühlschrank oder dergleichen sein.

Eine fünfte Fördereinrichtung 146 ist vorgesehen, um die Nachkühlstation 144 mit einer Abfüllstation 148 zu verbinden. Die fünfte Fördereinrichtung 146 kann von gleicher Art wie die vierte Fördereinrichtung 142 sein, beide können zusammenfallen. Die vierte und die fünfte Fördereinrichtung 142, 146 einschließlich Nachkühlstation 144, also der gesamte Weg von dem Prozessreaktor 102 bis zur Abfüllstation 148, sind möglichst steril gehalten. Idealerweise erfolgt der gesamte Weg unter Luftabschluss in luftdicht abgeschlossenen Rohren oder luftdicht abgeschlossenen Behältern.

Die Abfüllstation 148 ist in diesem Ausführungsbeispiel ausgebildet, die über die fünfte Fördereinrichtung 146 zugeführte Mischung unter sterilen Bedingungen in sterile Behälter 154 abzufüllen. Im dargestellten Beispiel können die Behälter 154 beispielsweise Folienschlauchbeutel sein. Zu diesem Zweck weist die Abfüllstation beispielsweise eine Folienzuführung 150 auf, in welcher etwa eine oder mehrere Folienrolle(n) oder gefaltete Schlauchrollen bereitgestellt ist/werden. Die Abfüllung geschieht in an sich bekannter Weise, aber unter sterilen Bedingungen. Zu diesem Zweck wird die Folie beispielsweise über Wasserstoffperoxyd komplett desinfiziert. Ebenso wird die gesamte Abfüllstation 148 desinfiziert und dann durch Sterilluft steril gehalten. Die leeren Behälter 154 werden vorgeformt und in Portionen gemäß Füllmenge gefüllt. Die gefüllten Behälter 154 werden steril versiegelt, beispielsweise über Ultraschallversiegelung, und verlassen die Abfüllstation 148 über eine sechste Fördereinrichtung 152, die hier als Förderband dargestellt ist.

In einer Verpackungsstation werden die einzelnen Behälter 154 sodann in Umverpackungen 158 verpackt und der Auslieferung zugeführt. Die Verpackungsstation 156 oder die Abfüllstation 148 können eine Prüfeinheit zum Prüfen der Behälter 154 auf Gewicht, Dichtigkeit, Nahtgüte und/oder dergleichen aufweisen. Ferner kann eine Etikettiereinheit (nicht näher dargestellt) vorgesehen sein, welche die Behälter 154 etikettiert.

Eine Steuereinrichtung 160 ist zur Steuerung der Vorrichtung vorgesehen. Insbesondere ist die Steuereinrichtung 160 zum Steuern der Temperiereinrichtung 103 hinsichtlich eines Temperaturregimes in dem Prozessreaktor 102 und der Mischeinrichtung 108 hinsichtlich Mischgeschwindigkeit und -dauer, wie auch der Öffnungs-/Schließzustände der Klappe 115 oder sonstiger Schließelemente der Zuführungseinrichtungen 114, 122, 130 und des Auslasses 140, der Nachkühlstation 142, der Fördermengen der Fördereinrichtungen 122, 128, 138, 142, 146, 152, der Kühltemperatur der Nachkühlstation 144. Der Abfüllvorgang in der Abfüllstation 148 und nachgeordnete Vorgänge können, müssen aber nicht durch andere Steuereinrichtungen oder autonom durch die jeweiligen Stationen gesteuert werden. Die Steuereinrichtung 160 kann die Vorrichtung so steuern, dass die Mischung ≤ 10 Gew.-% pflanzliche Proteine, ≤ 1 Gew.-%, insbesondere ≤ 0,1 Gew.-%, tierische Proteine, ≤ 15 Gew.-% Stärkequelle, und ≤ 15 Gew.-%, bevorzugt ≤ 10 Gew.-%, Pflanzenöl, Mineralstoffe, Vitamine und Geschmacksverstärker für den Erhalt eines veganen Nassfutterproduktes, das frei von tierischen Nahrungsbestandteilen ist, umfasst. Alternativ kann die Steuereinrichtung 160 kann die Vorrichtung so steuern, dass die Mischung 20 bis 30 Gew.-% tierische Proteine in Form von Fleisch und/oder tierischen Nebenerzeugnissen, und ≤ 15 Gew.-% Stärkequelle, Öl, Mineralstoffe, Vitamine und Geschmacksverstärker für den Erhalt eines flexitarischen Nassfutterproduktes umfasst.

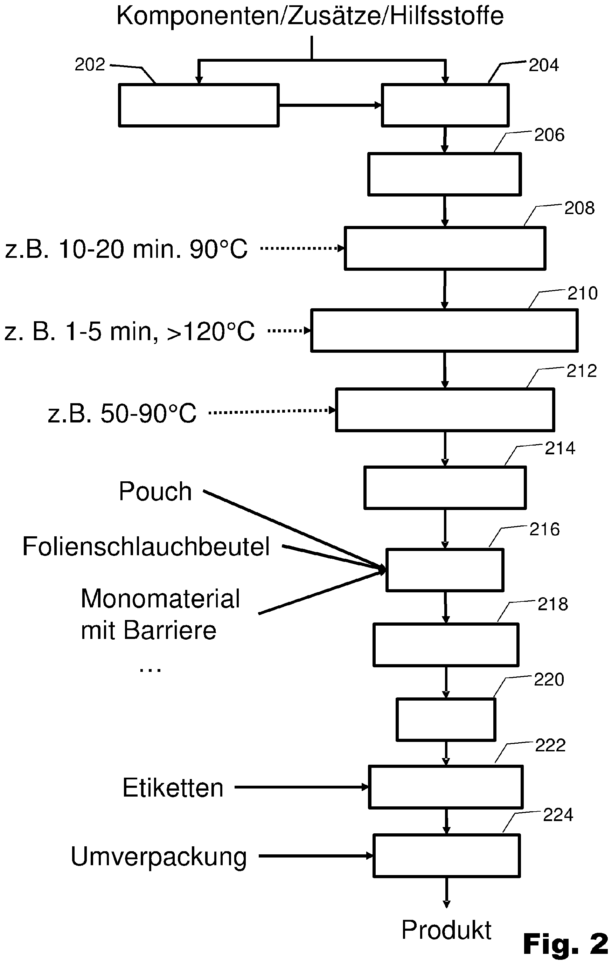

Die Herstellung eines Nassfutterprodukts mit Hilfe der vorstehend beschriebenen Vorrichtung wird nachstehend unter Bezugnahme auf ein Ablaufdiagramm in Fig. 2 näher beschrieben. Zunächst kann ein Zerkleinern der Speisepilze als Tierfutterkomponente 116 auf eine Partikelgröße, die im Wesentlichen der Partikelgröße von Hackfleisch, insbesondere einer Lochgröße von 2-8 mm, entspricht, erfolgen, gefolgt von einem Skalieren der gemahlenen Pilze auf eine vorbestimmte Menge und Vermischen der gemahlenen Pilze mit anderem Gemüse und/oder anderen Zutaten zur Herstellung einer nichtwässrigen Komponente. Dann wird der Prozessreaktor 102 mit zumindest einer festen Tierfutterkomponente 116 und zumindest einer Soße 124 über die erste Zuführungseinrichtung 114 und die zweite Zuführungsvorrichtung 122 beschickt. Weitere Komponenten können über jede der ersten, zweiten oder dritten Zuführungsvorrichtungen 114, 122, 130 zugeführt werden. Die Soße 124 oder andere Mischungen kann/können vorab aus Einzelkomponenten vorgemischt werden (Schritt 202). Die verschließbaren Zuführungsvorrichtungen 114, 122, 130 können verwendet werden, um die einzelnen Komponenten und/oder Vormischungen gemäß einer Rezeptur zu dosieren (Schritt 204). Hier kann ein Vermischen von kaltem Wasser unter Scherung mit einer Hydrokolloidmischung, Stärke, pflanzlichen Proteinen, Öl, Vitaminen, Mineralien und Geschmacksstoffen zur Bildung einer wässrigen Komponente erfolgen. Insbesondere können, wenn die Soße allein als Prozessflüssigkeit nicht ausreicht, weitere Komponenten wie etwa Wasser, Speiseöle oder dergleichen zugegeben werden.

Hinsichtlich der Zusammensetzung und Rezeptur ist die Erfindung nicht auf bestimmte Zusammensetzungen beschränkt. Allerdings eignet sich die erfindungsgemäße Vorrichtung und das damit durchführbare Herstellungsverfahren gut zur Herstellung von Nassfutter mit den nachstehend beschriebenen Zutaten:
Die festen Stücke können ein eiweißhaltiges Fleischanalogon aus essbaren Pilzen, ausgewählt entweder aus den Basidiomyceten, die zur Familie der Plueurotaceae einschließlich Agaricales, Agaricomycetes gehören oder aus Pleurotus ostreatus und Pleurotus eryngii, Gemüse, Früchte, Samen, Käse, echtes Fleisch, echten Fisch oder eine Kombination davon enthalten. Die Methoden zur Herstellung der festen Lebensmittelstücke sind in der Technik bekannt. Die festen Stücke sind durch eine gelierte oder eingedickte wässrige Phase miteinander verbunden oder darin enthalten. Die Textur des gelierten Nassfutterprodukts für Haustiere kann von einem festen Gel bis zu einer zähflüssigen Soße reichen.
Die Soßenkomponenten können Salze, Geschmacksstoffe, Schmackstoffe, Farbstoffe, Vitamine, Mikronährstoffe, Kräuter, Konservierungsmittel, Antioxidantien, Emulgatoren und Kombinationen davon enthalten.
Pflanzliches Eiweiß stammt vorzugsweise entweder aus Erbsenproteinkonzentrat/-isolat, Sojaproteinkonzentrat/-isolat, Weizenproteinkonzentrat/-isolat, Sonnenblumenprotein, Rapsprotein, Kichererbsenprotein, Lupine Protein, Ackerbohnenproteinkonzentrat, Kürbiskernprotein, Entenkrautprotein, Mykoprotein, Erdnussprotein, Hanfprotein, Quinoa, Chia, Amaranth, Linsen, Kichererbsen, Buchweizen, Dinkel, Nudeln (Vollkornnudeln, Kichererbsennudeln), Reis und Kombinationen davon oder aus Leguminosenproteinen.
Nicht-pflanzliches Protein stammt vorzugsweise aus Proteinquellen einschließlich, aber nicht beschränkt auf, Milchprotein, Eipulver, echtem Fleisch und/oder tierischen Nebenerzeugnissen und/oder Fleischderivaten.
Pflanzliches Fett oder Öl kann vorzugsweise aus Sonnenblumenöl (mit hohem Ölsäuregehalt), Rapsöl, Sojabohnenöl, Leinöl, Olivenöl, Kokosnussöl, Maisöl, Erdnussöl, Omega-3 ausgewählt werden, ist aber nicht darauf beschränkt Algenöl und Kombinationen davon.
Als Kohlenhydraten können beispielsweise Nudeln, Reis, Kartoffeln, Süßkartoffeln, Erbsen, Stärken und dergleichen verwendet werden.

Zu den Nicht-Stärke-Kohlenhydraten oder Hydrokolloiden, die insbesondere für die Soßenzubereitung verwendet werden können, gehören unter anderem Algenextrakte, Galaktomannan-Gummis, pektische Substanzen wie Zitrus- oder Apfelfasern und bakterielle Gummis. Die Hydrokolloide werden vorzugsweise ausgewählt aus Algenextrakten, Galaktomannanen, bakteriellen Hydrokolloiden, aus Zitrusschalen und Äpfeln extrahierten Pektinsubstanzen, Pflanzenfasern. Die Hydrokolloide sind am bevorzugtesten Agar-Agar, Carrageenan, Johannisbrotkernmehl, Guarkernmehl, Xanthangummi, Pektin, Zitrusfaser, Apfelfaser, Haferfaser, Karottenfaser und Gelan, besonders bevorzugt Cassia Gum.

Nach Dosierung der Zutaten wird der Prozessreaktor 102 verschlossen und werden die Zutaten angemischt (Schritt 206), beispielsweise nachdem ein Vermischen von wässrigen und nichtwässrigen Komponenten miteinander und ein Zuführen dieser Mischung in einen Behälter des Prozessreaktors 102, der als Garkocher ausgeführt sein kann, erfolgt ist. Unter dem Anmischen wird ein erstes Umwälzen ohne bedeutende Wärmezufuhr verstanden. Das Anmischen kann zumindest teilweise auch bei noch offenem Prozessreaktor 102 erfolgen.

Danach wird die Mischung unter weiterem Mischen gegart (Schritt 208). Hierzu wird die Mischung durch die Temperiereinrichtung 103 unter Steuerung durch die Steuerungseinrichtung 160 auf Gartemperatur, beispielsweise etwa 90° oder mehr, beispielsweise etwa 95°, erhitzt und für beispielsweise 10 bis 20 Minuten auf der Gartemperatur gehalten. Je nach Rezeptur können Gartemperatur und Gardauer variieren. Eine Ausführungsform sieht ein Garen der Mischung unter feuchten Bedingungen bei im Wesentlichen 90 °C oder 95°C für 15 bis 25 Minuten unter Unterdruck von 0,3 bis 0,5 bar, insbesondere bis 0,7 bar, der in dem Prozessreaktor 102 aufgebaut ist, unter ständigem Rühren vor.

Danach wird die Mischung unter weiterem Mischen sterilisiert (Schritt 210). Hierzu wird die Mischung durch die Temperiereinrichtung 103 unter Steuerung durch die Steuerungseinrichtung 160 auf Sterilisierungstemperatur, vorzugsweise größer als 120°, erhitzt und für beispielsweise 1 bis 5 Minuten auf der Sterilisierungstemperatur gehalten. Je nach Rezeptur, ggf. auch je nach vermuteter oder tatsächlicher Keimbelastung können Sterilisierungstemperatur und Sterilisierungsdauer variieren. Möglich ist z. B., dass nach Abschluss des Garens ein Sterilisieren der Mischung in demselben Behälter bei 121 °C, oder auch bei Temperaturen größer als 120 °C, für 3 Minuten unter Druck von 1 bis 2 bar stattfindet. Drücke zwischen 2 und 3 bar sind auch möglich.

Während des Garens und Sterilisierens kann das Innere des Prozessreaktors 102 auf einem Überdruck gehalten werden, der beispielsweise bis zu 4 bar oder auch mehr betragen kann. Sämtliche Verschlüsse, Dichtungen etc. des Prozessreaktors 102 sind auf diese Drücke wie auch auf die auftretenden Temperaturen ausgelegt.

Nach dem Sterilisieren kann die Mischung im Prozessreaktor 102 durch die Temperiereinrichtung 103 unter Steuerung durch die Steuerungseinrichtung 160 abgekühlt werden und/oder für einige Minuten ruhen (Schritt 212), bevor sie über den Auslass 140 aus dem Prozessreaktor 102 entnommen wird. Es hat sich als vorteilhaft erwiesen, wenn die Mischung den Prozessreaktor 102 mit etwa 80 bis 90 °C bei einer Heißabfüllung oder mit etwa 50 °C bei aseptischer Abfüllung, abhängig von dem jeweiligen Produktrezept, verlässt.

Ein anschließendes Lagern in einem aseptischen Tank 144 zur keimfreien Lagerung des sterilen Produkts bis zur Abfüllung (Schritt 214) ist optional.

Die Abfüllung (Schritt 216) in geeignete, sterile Behälter erfolgt in an sich bekannter Weise unter sterilen Bedingungen. Als Behälter eignen sich in besonderer Weise, aber nicht ausschließlich, Kunststoffbeutel oder Schlauchbeutel oder Folienschlauchbeutel oder Pouchbeutel oder Folienbeutel mit Standboden oder Schalen mit Deckel aus Folie oder dickerem Material (sog. Monomaterial mit Barriere). Das Ausgangsmaterial ist beispielsweise eine Folie aus lebensmittelechtem Kunststoff wie etwa PET, PE-HD, PE-LD, PP, und/oder mit einer antimikrobiellen, lebensmittelechten Beschichtung. Durch die Verwendung eines Ausgangsmaterials, das recyclingfähig ist, wie etwa Mono-PP, kann die Umweltbilanz verbessert werden. Als Behältergrößen werden derzeit solche bevorzugt, die eine Füllmenge von wenigstens 100g oder wenigstens 200g oder wenigstens 400g oder wenigstens 800g oder wenigstens 1200g und/oder von höchstens 5000 g oder höchstens 3000 g oder höchstens 2000 g oder höchstens 1200 g der sterilisierten Mischung aufweisen. Das Abfüllen wird von einem sterilen Versiegeln der Behälter gefolgt (Schritt 218). Die Verarbeitung der Ausgangsmaterialien und Halbzeuge, das Befüllen und Versiegeln sind in der Technik im Wesentlichen bekannt. Die Versiegelung kann beispielsweise durch Ultraschall erfolgen. Eine solche Naht ist besonders gut detektierbar, sodass ein anschließendes Prüfen der gefüllten und versiegelten Behälter (Schritt 220) auf Gewicht, Dichtigkeit, Nahtgüte und/oder weitere Parameter zuverlässige Ergebnisse liefert. Der Schritt 216 kann also erfolgen, indem nach der Sterilisation ein Abfüllen der Mischung aseptisch nach Gewicht in vorgeformte Beutel erfolgt, wobei ein einphasiges Heiß- oder Kaltabfüllverfahren bei 80 bis 85 °C oder weniger verwendet wird. Beim Abfüllen kann ein Phasenübergang der homogenen Masse der Mischung von hochviskoser zu halbfester kohäsiver Masse hergestellt werden, wobei die Masse durch hitzereversible Biopolymere strukturiert wird und eine Form der vorgeformten Beutel annimmt.

Das Verfahren wird durch Etikettieren (Schritt 222) und Verpacken (Schritt 224) der befüllten und geprüften Behälter abgeschlossen. Es wird so ein endverkaufsfähiges Nassfutterprodukt geschaffen, das hygienisch sicher, schmackhaft, nährstoffreich, ressourcenschonen und günstig ist.

Es sei darauf hingewiesen, dass der Kern der Erfindung in der gleichzeitigen Mischung und Sterilisierung der Mischung im selben temperierbaren Prozessreaktor 102 liegt. Jeder Zustand, der diese Prozessschritte erfüllt, ist, auch wenn es im beschriebenen Prozess ein Zwischenzustand ist, ein Nassfutterprodukt im Sinne der Erfindung. Die weiteren Prozessschritte und -parameter sind vorteilhaft, können aber abgewandelt, weggelassen oder in anderer Reihenfolge durchgeführt werden. Beispielsweise kann auf ein separates Garen im Prozessreaktor verzichtet werden, wenn die Komponenten allein durch das Sterilisieren ausreichend gegart werden, oder es können diejenigen Komponenten, die eine Garung benötigen, bereits im gegarten oder vorgegarten Zustand angeliefert, bevorratet und zudosiert werden.

Insbesondere ermöglicht die aseptische Verarbeitung im Vergleich zur konventionellen Sterilisation, bei der nasses Heimtierfutter hohen Temperaturen und langen Erhitzungszyklen unterworfen wird, die Sterilisation von nassem Heimtierfutter unter Verwendung eines kurzen Erhitzungszyklus mit Temperaturen von beispielsweise 115-120°C und einer Dauer von beispielsweise 3-5 Minuten. Infolgedessen hat das Nassfutter für Haustiere, das unter Verwendung eines Kurzzeit-/Temperaturerhitzungsverfahrens aseptisch verarbeitet wird, einen besseren Erhalt von Nährstoffen, Vitaminen, bioaktiven und hitzeempfindlichen Bestandteilen im Vergleich zu demjenigen, das unter Verwendung eines Langzeit-/Temperaturerhitzungsverfahrens verarbeitet wird.

Die unter Bezug auf die dargestellten und/oder beschriebenen Ausführungsbeispiele beschriebenen Merkmale der Erfindung können auch bei anderen Ausführungsformen der Erfindung vorhanden sein, außer wenn es anders angegeben ist oder sich aus technischen Gründen von selbst verbietet. Im Übrigen wird der Gegenstand der Erfindung allein durch den oder die unabhängigen Ansprüche definiert. Weitere Gegenstände können durch jedwede Kombination von hierin beschriebenen Merkmalen gebildet werden, die gegenüber dem Stand der Technik neu ist und diesem Stand der Technik gegenüber einer objektiven Aufgabe in nicht naheliegender Weise löst, ohne dass es dafür zwingend anderer Merkmale, die zur Lösung dieser Aufgabe nicht erforderlich sind, bedürfte, auch wenn diese anderen Merkmale in den hierin beschriebenen Ausführungsbeispielen vorhanden sind. Einzelheiten eines Ausführungsbeispiels sind, soweit nicht konkret unabhängig beansprucht, als beispielhaft und optional zu betrachten.

## Patentansprüche

1. Verfahren zur Herstellung eines Nassfutterproduktes für Tiere, insbesondere Haustiere, aufweisend die Schritte:
- Mischen fester Tiernahrungskomponenten (116) mit einer Soße (124) oder Soßenkomponenten in einem temperierbaren Prozessreaktor (102), und
- Sterilisieren der Mischung durch Wärmebehandlung in dem Prozessreaktor (102).

2. Verfahren nach Anspruch 1, aufweisend die Schritte:
- das Mischen (206) fester Tiernahrungskomponenten (116), die Speisepilze, die beispielsweise ausgewählt werden entweder aus den Basidiomyceten, die zur Familie der Pleurotaceae einschließlich Agaricales, Agaricomycetes gehören oder aus Pleurotus ostreatus und Pleurotus eryngii, und pflanzliches und/oder tierisches Protein umfassen, mit einer Soße (124) oder Soßenkomponenten, und optional weiteren Komponenten (132), die Stärke, insbesondere in Form einer Stärkequelle, Öl, insbesondere Pflanzenöl, Mineralstoffe, Vitamine und Geschmacksverstärker umfassen, in einem temperierbaren Prozessreaktor (102), insbesondere in Form eines Garkochers, derart, dass die Mischung 5 bis 20 Gew.-% Speisepilze und entweder ≤ 10 Gew.-% pflanzliche Proteine oder 20 bis 30 Gew.-% tierische Proteine aufweist, und
- das Sterilisieren (210) der Mischung durch Wärmebehandlung in dem Prozessreaktor (102) derart, dass nach dem Sterilisieren die Mischung einen Trockenmasseanteil von ≤ 55 %, insbesondere ca. 35 bis 18 %, und eine Wasseraktivität von ≥ 0,9 aufweist.

3. Verfahren nach Anspruch 2, wobei die Komponenten so zusammengestellt werden, dass die die Mischung, insbesondere die abgefüllte Mischung, umfasst:
- ≤ 10 Gew.-% pflanzliche Proteine, ≤ 1 Gew.-%, insbesondere ≤ 0,1 Gew.-%, tierische Proteine, ≤ 15 Gew.-% Stärkequelle, und ≤ 15 Gew.-%, bevorzugt ≤ 10 Gew.-%, Pflanzenöl, Mineralstoffe, Vitamine und Geschmacksverstärker für den Erhalt eines veganen Nassfutterproduktes, das frei von tierischen Nahrungsbestandteilen ist, wobei insbesondere das pflanzliche Protein in Form von entweder Erbsenproteinkonzentrat/-isolat, Sojaproteinkonzentrat/- isolat, Weizenproteinkonzentrat/-isolat, Sonnenblumenprotein, Rapsprotein, Kichererbsenprotein, Lupinenprotein, Ackerbohnenproteinkonzentrat, Kürbiskernprotein, Entenkrautprotein, Mykoprotein, Erdnussprotein, Hanfprotein, Quinoa, Chia, Amaranth, Linsen, Kichererbsen, Buchweizen, Dinkel, Nudeln (Vollkornnudeln, Kichererbsennudeln), Reis und Kombinationen davon oder in Form von Leguminosenproteinen ausgeführt wird.

4. Verfahren nach Anspruch 2, wobei die Komponenten so zusammengestellt werden, dass die die Mischung, insbesondere die abgefüllte Mischung, umfasst:
- 20 bis 30 Gew.-% tierische Proteine in Form von Fleisch und/oder tierischen Nebenerzeugnissen, und ≤ 15 Gew.-% Stärkequelle, Öl, Mineralstoffe, Vitamine und Geschmacksverstärker für den Erhalt eines flexitarischen Nassfutterproduktes.

5. Verfahren nach einem der vorhergehenden Ansprüche, ferner aufweisend die Schritte:
- aseptisches Abfüllen der sterilisierten Mischung in sterile Behälter (154), wobei die sterilen Behälter (154) vorzugsweise
- Kunststoffbeutel oder Schlauchbeutel oder Folienschlauchbeutel oder Pouchbeutel oder Folienbeutel mit Standboden oder Schalen sind und/oder
- eine Füllmenge von wenigstens 100 g oder wenigstens 200 g oder wenigstens 400 g oder wenigstens 1200 g und/oder von höchstens 2000 g oder höchstens 1200 g der sterilisierten Mischung aufweisen,
- steriles Versiegeln (218) der sterilen Behälter (154) nach dem Befüllen, wobei das Versiegeln vorzugsweise eine detektierbare Ultraschallversiegelung umfasst, wobei die sterilen Behälter (154) Kunststoffbeutel oder Schlauchbeutel oder Folienschlauchbeutel oder Pouchbeutel oder Folienbeutel mit oder ohne Standboden oder Schalen sind.

6. Verfahren nach einem der vorhergehenden Ansprüche, wobei die Wärmebehandlung ein Erhitzen auf eine Sterilisierungstemperatur und Halten auf der Sterilisierungstemperatur für eine Sterilisierungsdauer umfasst, wobei die Sterilisierungstemperatur vorzugsweise wenigstens 110°C oder wenigstens 120 °C und/oder höchstens 130 °C oder höchstens 125 °C oder höchstens 122 °C oder höchstens 121 °C beträgt und wobei die Sterilisierungsdauer vorzugsweise höchstens 10 Minuten oder höchstens 5 Minuten oder höchstens 3 Minuten beträgt.

7. Verfahren nach einem der vorhergehenden Ansprüche, wobei in dem Prozessreaktor (102) wenigstens während der Wärmebehandlung ein Druck von wenigstens 1 bar oder wenigstens 2 bar und/oder höchstens 4 bar aufrechterhalten wird.

8. Verfahren nach einem der vorhergehenden Ansprüche, ferner aufweisend den Schritt:
- Garen (208) der Mischung in dem Prozessreaktor (102) bei einer Gartemperatur für eine Gardauer vor dem Sterilisieren, wobei die Gartemperatur vorzugsweise höchstens 90 °C oder höchstens 75 °C oder höchstens 60 °C beträgt und wobei die Gardauer vorzugsweise höchstens 40 Minuten oder höchstens 30 Minuten oder höchstens 20 Minuten beträgt und/oder vorzugsweise wenigstens 5 Minuten oder wenigstens 10 Minuten oder wenigstens 15 Minuten beträgt.

9. Verfahren nach einem der vorhergehenden Ansprüche, ferner wenigstens einen der Schritte aufweisend:
- Zubereiten (202) der Soße (124) mittels Zugebens der Soßenkomponenten zu Wasser und anschließendes Mischen der Soße (124) mit den festen Tiernahrungskomponenten (116), vorzugsweise unter weiterem Mischen innerhalb des Prozessreaktors (102),
- Bereitstellen der Soße (124) mittels Dispergierens einer vorbestimmten Menge an Hydrokolloidmischung, der Stärke, des pflanzlichen Proteins, des Pflanzenöls, der Mineralien, der Vitamine, der Geschmacksverstärker in Wasser und ein Mischen der Soßengrundlage für einige Minuten, vorzugsweise für höchstens 10 Minuten oder höchstens 5 Minuten.

10. Verfahren nach einem der vorhergehenden Ansprüche, wobei die Komponenten so zusammengestellt werden, dass die Inhaltsstoffe der Mischung aufweisen:
- 5 Gew.-% oder mehr, optional 20 Gew.-% oder weniger frische Speisepilze der Gattung Pleurotus
- 10 Gew.-% oder weniger pflanzliches Protein
- 0,1 Gew.-% oder weniger Proteine tierischen Ursprung
- optional 5 Gew.-% oder mehr Gemüse und/oder Obst
- 15 Gew.-% oder weniger einer Stärkequelle
- 2 Gew.-% oder weniger Hydrokolloidmischung
- 10 Gew.-% oder weniger pflanzliches Fett oder Öl
- 0,5 Gew.-% Samen
- Mineral- und Vitaminvormischung (1-2 Gew.-%) und Geschmacksverstärker (0,5-2 Gew.-%), Rest Wasser und/oder Brühe (30-50 Gew.-%)
oder
- 5 Gew.-% oder mehr, optional 20 Gew.-% oder weniger frische Speisepilze der Gattung Pleurotus,
- 0,1 Gew.-% oder weniger pflanzliches Protein
- 20-30 Gew.-% tierische Proteine
- optional 5 Gew.-% oder mehr Gemüse und/oder Obst
- 15 Gew.-% oder weniger eine Stärkequelle
- 2 Gew.-% oder weniger Hydrokolloidmischung
- 0,1 Gew.-% oder weniger pflanzliches Fett oder Öl
- 0,5 Gew.-% Samen
- Mineral- und Vitaminvormischung (1-2 Gew.-%) und Geschmacksverstärker (0,5-2 Gew.-%), Rest Wasser und/oder Brühe (30-50 Gew.-%).

11. Verfahren nach einem der vorhergehenden Ansprüche, ferner aufweisend die Schritte auf:
- Zerkleinern von Speisepilzen auf eine Partikelgröße, die im Wesentlichen der Partikelgröße von Hackfleisch entspricht,
- Skalieren (202) der gemahlenen Pilze auf eine vorbestimmte Menge und Vermischen der gemahlenen Pilze mit anderem Gemüse und/oder anderen Zutaten zur Herstellung einer nichtwässrigen Komponente,
- Vermischen (204) von kaltem Wasser unter Scherung mit einer Hydrokolloidmischung, Stärke, pflanzlichen Proteinen, Öl, Vitaminen, Mineralien und Geschmacksstoffen zur Bildung einer wässrigen Komponente,
- Vermischen (206) von wässrigen und nichtwässrigen Komponenten miteinander und Zuführen dieser Mischung in einen Behälter des Prozessreaktors (102) in Form eines Garkochers,
- Garen (208) der Mischung unter feuchten Bedingungen bei im Wesentlichen 90 °C für 15 bis 25 Minuten unter Unterdruck von 0,3 bis 0,5 bar, der in dem Garkocher aufgebaut ist, unter ständigem Rühren,
- nach Abschluss des Garens Sterilisieren (210) der Mischung in demselben Behälter bei 120 °C oder mehr für 3 Minuten unter Druck von 1 bis 2 bar,
- nach der Sterilisation Abfüllen (214) der Mischung aseptisch nach Gewicht in vorgeformte Beutel, wobei ein einphasiges Heiß- oder Kaltabfüllverfahren bei 80 bis 85 °C oder weniger verwendet wird,
- Herstellen eines Phasenübergangs der homogenen Masse der Mischung von hochviskoser zu halbfester kohäsiver Masse beim Abfüllen, wobei die Masse durch hitzereversible Biopolymere strukturiert wird und eine Form der Verpackung annimmt.

12. Nassfutterprodukt für Tiere, insbesondere Haustiere, hergestellt durch das Verfahren nach einem der vorhergehenden Ansprüche.

13. Vorrichtung zur Herstellung eines Nassfutterprodukts für Tiere, insbesondere Haustiere, wobei die Vorrichtung aufweist:
- einen Prozessreaktor (102), der zur Aufnahme fester Tiernahrungskomponenten (116) und einer Soße (124) oder Soßenkomponenten ausgebildet ist,
- eine Temperiereinrichtung (103), die zum Temperieren des Prozessreaktors (102), insbesondere von Wänden des Prozessreaktors (102), ausgebildet ist,
- eine Mischeinrichtung (108), die zum Mischen der im Prozessreaktor (102) befindlichen Komponenten eingerichtet ist, und
- eine Steuereinrichtung (160), welche zum Steuern der Mischeinrichtung (108), um die Komponenten in dem Prozessreaktor (102) zu vermischen, und zum Steuern der Temperiereinrichtung (103), um die Komponenten oder die Mischung in dem Prozessreaktor (102) durch Wärmebehandlung zu sterilisieren, ausgebildet und konfiguriert ist.

14. Vorrichtung nach Anspruch 13, wobei die Vorrichtung aufweist:
- den Prozessreaktor (102), vorzugsweise in Form eines Garkochers, der zur Aufnahme fester Tiernahrungskomponenten (116), die Speisepilze und pflanzliches und/oder tierisches Protein umfassen, und einer Soße (124) oder Soßenkomponenten, und optional weiteren Komponenten (132), die Stärke, insbesondere in Form einer Stärkequelle, Öl, insbesondere Pflanzenöl, Mineralstoffe, Vitamine und Geschmacksverstärker umfassen, ausgebildet ist,
- die Temperiereinrichtung (103), die zum Temperieren des Prozessreaktors (102), insbesondere von Wänden des Prozessreaktors (102), ausgebildet ist,
- die Mischeinrichtung (108), die zum Mischen der im Prozessreaktor (102) befindlichen Komponenten derart eingerichtet ist, dass die Mischung 5 bis 20 Gew.-% Speisepilze und entweder ≤ 10 Gew.-% pflanzliche Proteine oder 20 bis 30 Gew.-% tierische Proteine aufweist, und
- die Steuereinrichtung (160), welche zum Steuern der Mischeinrichtung (108), um die Komponenten in dem Prozessreaktor (102) zu vermischen, und zum Steuern der Temperiereinrichtung (103), um die Komponenten oder die Mischung in dem Prozessreaktor (102) durch Wärmebehandlung zu sterilisieren, derart ausgebildet und konfiguriert ist, dass nach dem Sterilisieren die Mischung einen Trockenmasseanteil von ≤ 55 %, insbesondere ca. 35 bis 18 %, und eine Wasseraktivität von ≥ 0,9 aufweist.

15. Vorrichtung nach Anspruch 14, wobei die Steuereinrichtung (160) ausgebildet und konfiguriert ist, entweder den Prozessreaktor (102) so zu steuern, dass die Mischung ≤ 10 Gew.-% pflanzliche Proteine, ≤ 1 Gew.-%, insbesondere ≤ 0,1 Gew.-%, tierische Proteine, ≤ 15 Gew.-% Stärkequelle, und ≤ 15 Gew.-%, bevorzugt ≤ 10 Gew.-%, Pflanzenöl, Mineralstoffe, Vitamine und Geschmacksverstärker für den Erhalt eines veganen Nassfutterproduktes, das frei von tierischen Nahrungsbestandteilen ist, umfasst, oder den Prozessreaktor (102) so zu steuern, dass die Mischung 20 bis 30 Gew.-% tierische Proteine in Form von Fleisch und/oder tierischen Nebenerzeugnissen, und ≤ 15 Gew.-% Stärkequelle, Öl, Mineralstoffe, Vitamine und Geschmacksverstärker für den Erhalt eines flexitarischen Nassfutterproduktes umfasst.
